# EUROPEAN PATENT SPECIFICATION

(11) **EP 3 054 141 B1**
(45) Date of publication and mention of the grant of the patent: **10.08.2022**
(21) Application number: 16154894.6
(22) Date of filing: 09.02.2016
(51) Int. Cl.: F02K 3/06, F02C 3/107, F02C 7/36

(54) **GEAR REDUCTION FOR GEARED TURBOFAN**
REDUKTIONSGETRIEBE FÜR GETRIEBEFAN
RÉDUCTION D'ENGRENAGE POUR TURBORÉACTEUR À ENGRENAGE

(30) Priority: 09.02.2015 US 201514616922
(43) Date of publication of application: 10.08.2016
(73) Proprietor: Raytheon Technologies Corporation, Farmington, CT 06032 (US)
(72) Inventor: SCHWARZ, Frederick M., Glastonbury, CT Connecticut 06033 (US); SHERIDAN, William G., Southington, CT Connecticut 06489 (US)
(74) Representative: Dehns

(56) References cited:
- WO-A2-2015/012923
- US-A1- 2007 240 399
- US-A1- 2008 120 839
- US-A1- 2009 056 306
- US-A1- 2012 213 628
- Mark Daly ET AL: "Aero-engines", Jane's, 1 March 2008 (2008-03-01), pages 706-712, XP055491333, Retrieved from the Internet: URL:jae.janes.com [retrieved on 2018-07-10]
- Dale Rauch: "DESIGN STUDY OF AN AIR PUMP AND INTEGRAL LIFT ENGINE ALF-504 USING THE LYCOMING 502 CORE", NASA Report CR-120992, 31 July 1972 (1972-07-31), XP055273059, Retrieved from the Internet: URL:http://ntrs.nasa.gov/archive/nasa/casi .ntrs.nasa.gov/19730004744.pdf [retrieved on 2016-05-17]

## Description

### BACKGROUND OF THE INVENTION

This application relates to a gear reduction which is particularly applicable to relatively small diameter geared turbofans.

Gas turbine engines are known and typically include a fan delivering air into a compressor. The air is compressed and delivered into a combustor where it is mixed with fuel and ignited. Products of this combustion pass downstream over turbine rotors driving them to rotate. The turbine rotors, in turn, drive compressor and fan rotors.

Historically, the fan rotor rotated at the same speed as a turbine rotor. More recently, it has been proposed to include a gear reduction between a fan driving turbine and the fan rotor. With this change, the fan rotor may increase in diameter and rotate at slower speeds. However, the inclusion of the gear reduction raises packaging challenges.

A prior art gas turbine engine, having the features of the preamble of claim 1, is disclosed in WO-2015/012923 A1. Another prior art gas turbine engine is disclosed in US 2009/0056306 A1. A prior art method for assembling a gas turbine engine is disclosed in US 2007/0240399 A1. A prior art turbofan engine assembly is disclosed in US 2008/0120839 A1.

### SUMMARY OF THE INVENTION

According to the present invention, there is provided a gas turbine engine as recited in claim 1.

In another embodiment according to any of the previous embodiments, the gear reduction is a star gear reduction.

In another embodiment according to any of the previous embodiments, the gear reduction is equal to about 3.1.

These and other features may be best understood from the following drawings and specification.

### BRIEF DESCRIPTION OF THE DRAWINGS

Figure 1A schematically shows an embodiment of a gas turbine engine.
Figure 1B shows an alternative embodiment of a gas turbine engine.
Figure 2 shows a detail of the gas turbine engine of Figure 1A or Figure IB.
Figure 3 shows a detail of an embodiment of a gear reduction for the gas turbine engine of Figure 1A or Figure IB.

### DETAILED DESCRIPTION

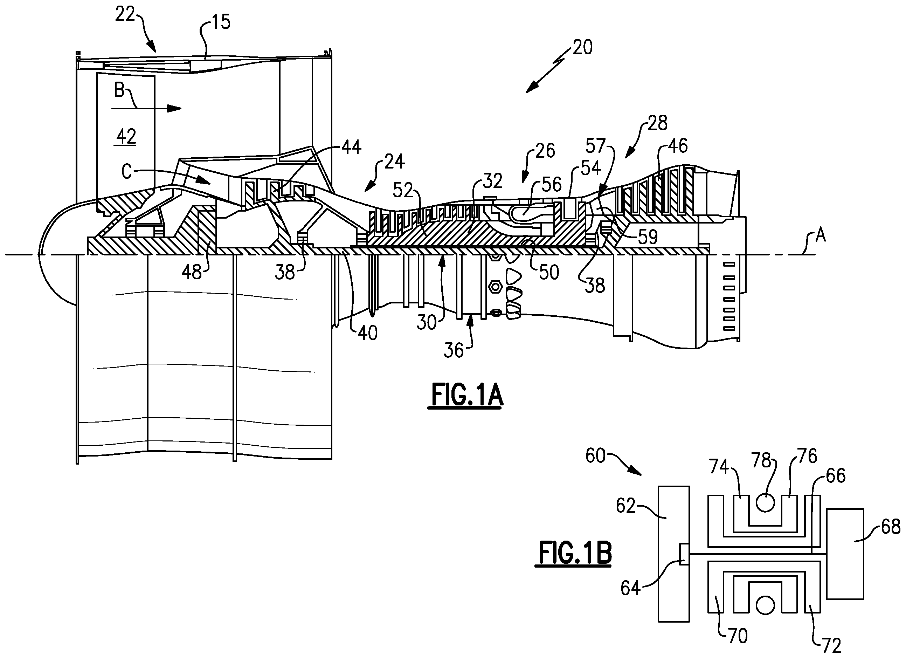

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3:1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3 (2.3:1). It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}(where °R = K x 9/5). The "Low corrected fan tip speed" as disclosed herein according to one non-limiting embodiment is less than about 1150 ft / second (350.5 meters/second).

Figure 1B shows an alternative embodiment. Figure 1B shows an embodiment 60, wherein there is a fan drive turbine 68 driving a shaft 66 to in turn drive a fan rotor 62. A gear reduction 64 may be positioned between the fan drive turbine 68 and the fan rotor 62. This gear reduction 64 may be structured and operate like the gear reduction disclosed above. A compressor rotor 70 is driven by an intermediate pressure turbine 72, and a second stage compressor rotor 74 is driven by a turbine rotor 76. A combustion section 78 is positioned intermediate the compressor rotor 74 and the turbine section 76.

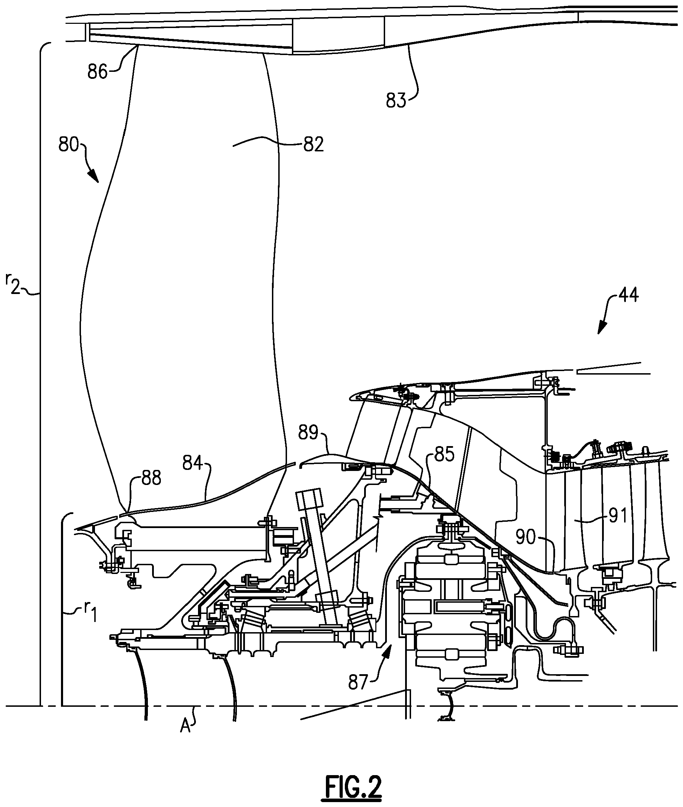

Figure 2 shows an engine 80 which may be a relatively small diameter engine. Fan blades 82 extend from a hub 84. A nacelle 83 defines a bypass duct. A radially outer tip 86 of the fan blades 82 at an inlet end is spaced from a radially inner inlet end 88 of the hub 84. A first radius r₁ can be defined between the centerline A and the point 88. A second radius r₂ is defined between centerline A and point 86. It is desirable to decrease a ratio of r₁:r₂. However, there are limitations on how small the ratio can be made. The ratio of r₁:r₂ is greater than or equal to about 0.24 and less than or equal to about 0.36.

A point 89 is a radially outermost or "highest" point on a curved or contoured surface leading into the compressor section 44. Note, this structure could also be included in an engine as disclosed in Figure IB. A point 90 is defined immediately upstream of the first blade row 91 of the compressor section 44. As can be seen, a surface 85 extends between points 89 and 90. A gear reduction 87 is positioned intermediate the points 89 and 90. As can be appreciated from this figure, the gear reduction includes multiple components which must be packaged radially inwardly of the surface 85. In addition, the gear reduction 87 is positioned intermediate the fan hub 84 and the point 90.

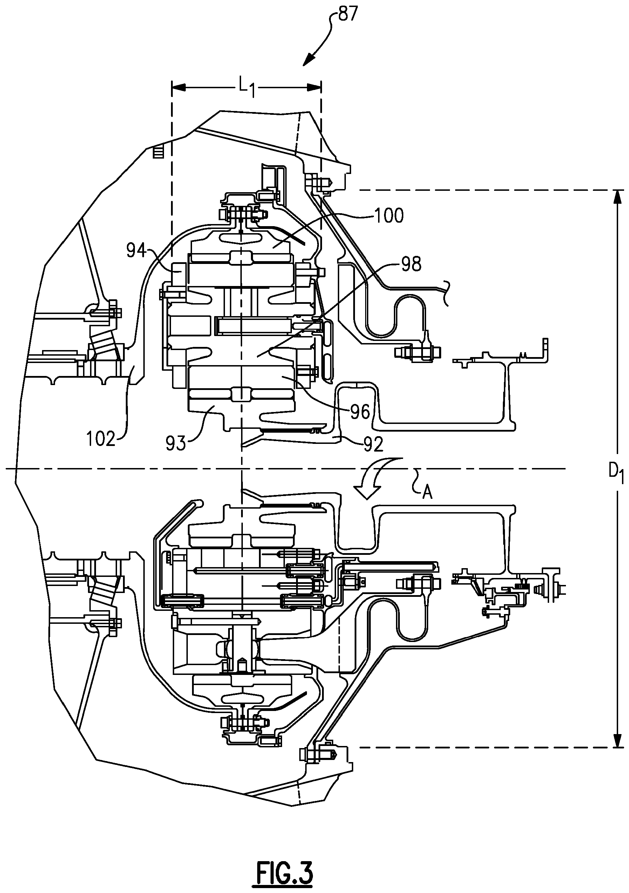

Figure 3 shows the gear reduction 87. An input shaft 92 is driven by the fan drive turbine 46/68 and, in turn, drives a sun gear 93. A carrier 94 mounts the sun gear 93 and a plurality of star gears 96. Star gears 96 are mounted on journals 98 which are fixed within the carrier 94. As known, the sun gear 93 rotates and, in turn, rotates the star gears 96, which then cause a ring gear 100 to rotate. Ring gear 100 drives a flexible shaft 102 which, in turn, drives the fan hub 84.

The gear reduction 87 is a star gear reduction and has a gear ratio of greater than or equal to about 3.0. In one embodiment, the gear reduction was 3.1.

In order to package the gear reduction 87 within a relatively small space, a diameter D₁ of the gear reduction 87 is desirably reduced. To achieve this reduction, the journal bearings 98 and the ring gear 100 are made to be relatively axially long or extend for a relatively great distance l₁ measured along the axis A.

An inlet to surface 85 leads into the compressor. The surface 85 curves from a radially outermost point 89 radially inwardly to a point 90 leading into the first compressor blade row 91. The gear reduction 87 is positioned between the radially outermost point 89 and point 90. Point 90 is radially inward of a radially outermost point of ring gear 100.

In this manner, an engine can be designed which has a smaller diameter than in the past. Thus, surface 85 can move inwardly to result in this small diameter. Also, surface 85 can be designed for best operation of the engine rather than being constrained by the need to package gear reduction 87.

A volume of the ring gear 100 plus the carrier 94 is greater than or equal to 899 inches³ (14732 cm³) and less than or equal to 1349 inches³ (22106.15 cm³). The length L₁ may be greater than or equal to about 3.762 inches and less than or equal to about 5.7 inches.

A ratio of the length L₁ to the diameter D₁ is greater than or equal to about 0.20 and less than or equal to about 0.40.

The disclosed engine is particularly useful in lower thrust ranges. The engine has greater than or equal to 17,000 lbs (75.62 kN) of thrust and less than or equal to about 26,000 lbs (115.65 kN) of thrust which benefits from this design.

The bypass ratio is greater than or equal to about 12.0.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (80) having, in operation, greater than or equal to 17,000 lbs (75.62 kN) of thrust and less than or equal to about 26,000 lbs (115.65 kN) of thrust, comprising:
a fan rotor having a hub (84) and a plurality of fan blades (82) extending radially outwardly of said hub (84);
a compressor positioned downstream of the fan rotor, the compressor having a first compressor blade row (91) defined along a rotational axis (A) of said fan rotor; and
a gear reduction (87) positioned axially between said first compressor blade row (91) and said fan rotor, said gear reduction (87) including a ring gear (100) and a carrier (94), said carrier (94) having an axial length (L₁) and said ring gear having an outer diameter (D₁), wherein said gear reduction (87) is connected to drive said hub (84) to rotate, and a gear ratio of said gear reduction (87) is greater than or equal to 3.0, wherein:
a volume is defined for said carrier (94) and said ring gear (100), and said volume being designed to be greater than or equal to 899 inches³ (14732 cm³) and less than or equal to 1349 inches³ (22106.15 cm³);
the hub (84) has a radius (r₁) defined at an inlet point of said hub (84), said fan blades (82) have a radius (r₂), and a ratio of said hub radius (r₁) to said fan blade radius (r₂) is less than or equal to 0.36;
said ratio of said hub radius (r₁) to said fan blade radius (r₂) is greater than or equal to 0.24;
a bypass ratio, defined as a volume of air delivered by said fan rotor into a bypass duct compared to the volume of air delivered into said compressor, is greater than or equal to 12.0; and
an inlet into said compressor extends radially, inwardly along a surface (85) from a radially outermost point (89) to a point (90) leading into said first compressor blade row (91), said gear reduction (87) is positioned between said radially outermost point (89) and said point (90) leading into said first compressor blade row (91), and said point (90) leading into said first compressor blade row (91) is radially inward of said ring gear (100); **characterised in that**:
a ratio of said axial length (L₁) to said out diameter (D₁) is greater than or equal to 0.20 and less than or equal to 0.40.

2. The gas turbine engine (80) as set forth in claim 1, wherein said gear reduction (87) is a star gear reduction.

3. The gas turbine engine (80) as set forth in claim 1 or 2, wherein said gear reduction (87) is equal to 3.1.

## Patentansprüche

1. Gasturbinentriebwerk (80), das im Betrieb einen Schub größer oder gleich 17.000 lbs (75,62 kN) und einen Schub kleiner oder gleich 26.000 lbs (115,65 kN) aufweist, umfassend:
einen Fanrotor, der eine Nabe (84) und eine Vielzahl von Fanschaufeln (82) aufweist, die sich von der Nabe (84) radial nach außen erstreckt;
einen Verdichter, der stromabwärts des Fanrotors positioniert ist, wobei der Verdichter eine erste Verdichterschaufelreihe (91) aufweist, die entlang einer Rotationsachse (A) des Fanrotors definiert ist; und
ein Reduktionsgetriebe (87), das axial zwischen der ersten Verdichterschaufelreihe (91) und dem Fanrotor positioniert ist, wobei das Reduktionsgetriebe (87) ein Hohlrad (100) und einen Träger (94) beinhaltet, wobei der Träger (94) eine axiale Länge (L₁) aufweist und das Hohlrad einen Außendurchmesser (D₁) aufweist, wobei das Reduktionsgetriebe (87) verbunden ist, um die Nabe (84) zur Rotation anzutreiben, und wobei ein Übersetzungsverhältnis des Reduktionsgetriebes (87) größer als oder gleich 3,0 ist, wobei:
für den Träger (94) und das Hohlrad (100) ein Volumen definiert ist und wobei das Volumen derart konzipiert ist, dass es größer als oder gleich 899 Zoll³ (14732 cm³) und kleiner als oder gleich 1349 Zoll³ (22106,15 cm³) ist;
die Nabe (84) einen Radius (r₁) aufweist, der an einem Einlasspunkt der Nabe (84) definiert ist, wobei die Fanschaufeln (82) einen Radius (r₂) aufweisen, und wobei ein Verhältnis des Nabenradius (r₁) zu dem Fanschaufelradius (r₂) kleiner als oder gleich 0,36 ist;
das Verhältnis des Nabenradius (r₁) zu dem Fanschaufelradius (r₂) größer als oder gleich 0,24 ist;
ein Nebenstromverhältnis, das als ein Volumen von Luft, das durch den Fanrotor in einen Nebenstromkanal geleitet wird, im Vergleich zu dem Volumen von Luft, das in den Verdichter geleitet wird, definiert ist, größer als oder gleich 12,0 ist; und
sich ein Einlass in den Verdichter radial, nach innen entlang einer Fläche (85) von einem radial äußersten Punkt (89) zu einem Punkt (90) erstreckt, der in die erste Verdichterschaufelreihe (91) führt, wobei das Reduktionsgetriebe (87) zwischen dem radial äußersten Punkt (89) und dem Punkt (90), der in die erste Verdichterschaufelreihe (91) führt, positioniert ist und wobei der Punkt (90), der in die erste Verdichterschaufelreihe (91) führt, radial innerhalb des Hohlrads (100) liegt; **dadurch gekennzeichnet, dass**:
ein Verhältnis der axialen Länge (L₁) zum Außendurchmesser (D₁)größer als oder gleich 0,20 und kleiner als oder gleich 0,40 ist.

2. Gasturbinentriebwerk (80) nach Anspruch 1, wobei das Reduktionsgetriebe (87) ein Sternreduktionsgetriebe ist.

3. Gasturbinentriebwerk (80) nach Anspruch 1 oder 2, wobei das Reduktionsgetriebe (87) gleich 3,1 ist.

## Revendications

1. Moteur à turbine à gaz (80) ayant, en fonctionnement, une poussée supérieure ou égale à 17000 lbs (75,62 kN) et une poussée inférieure ou égale à environ 26 000 lbs (115,65 kN), comprenant :
un rotor de soufflante comportant un moyeu (84) et une pluralité d'aubes de soufflante (82) s'étendant radialement vers l'extérieur dudit moyeu (84) ;
un compresseur positionné en aval du rotor de soufflante, le compresseur ayant une première rangée d'aubes de compresseur (91) définie le long d'un axe de rotation (A) dudit rotor de soufflante ; et
une réduction d'engrenage (87) positionnée axialement entre ladite première rangée d'aubes de compresseur (91) et ledit rotor de soufflante, ladite réduction d'engrenage (87) incluant une couronne dentée (100) et un porteur (94), ledit porteur (94) ayant une longueur axiale (L₁) et ladite couronne dentée ayant un diamètre extérieur (D₁), dans lequel ladite réduction d'engrenage (87) est reliée pour entraîner la rotation dudit moyeu (84), et un rapport d'engrenage de ladite réduction d'engrenage (87) est supérieur ou égal à 3,0, dans lequel :
un volume est défini pour ledit porteur (94) et ladite couronne dentée (100), et ledit volume étant conçu pour être supérieur ou égal à 899 pouces³ (14 732 cm³) et inférieur ou égal à 1 349 pouces³ (22 106, 15 cm³) ;
le moyeu (84) a un rayon (r₁) défini au niveau d'un point d'entrée dudit moyeu (84), lesdites aubes de soufflante (82) ont un rayon (r₂), et un rapport dudit rayon de moyeu (r₁) sur ledit rayon d'aube de soufflante (r₂) est inférieur ou égal à 0,36 ;
ledit rapport dudit rayon de moyeu (r₁) sur ledit rayon d'aube de soufflante (r₂) est supérieur ou égal à 0,24 ;
un rapport de dérivation, défini comme un volume d'air distribué par ledit rotor de soufflante dans un conduit de dérivation par rapport au volume d'air distribué dans ledit compresseur, est supérieur ou égal à 12,0 ; et
une entrée dans ledit compresseur s'étend radialement, vers l'intérieur le long d'une surface (85) depuis un point radialement le plus extérieur (89) jusqu'à un point (90) menant dans ladite première rangée d'aubes de compresseur (91), ladite réduction d'engrenage (87) est positionnée entre ledit point radialement le plus extérieur (89) et ledit point (90) menant dans ladite première rangée d'aubes de compresseur (91), et ledit point (90) menant dans ladite première rangée d'aubes de compresseur (91) est radialement vers l'intérieur de ladite couronne dentée (100) ; **caractérisé en ce que** :
un rapport de ladite longueur axiale (L₁) sur ledit diamètre extérieur (D₁)est supérieur ou égal à 0,20 et inférieur ou égal à 0,40.

2. Moteur à turbine à gaz (80) selon la revendication 1, dans lequel ladite réduction d'engrenage (87) est une réduction d'engrenage en étoile.

3. Moteur à turbine à gaz (80) selon la revendication 1 ou 2, dans lequel ladite réduction d'engrenage (87) est égale à 3,1.
